Europäisches Patentamt

European Patent Office

Office européen des brevets

(19)

(11) Veröffentlichungsnummer: **0 394 604**
**A2**

(12) # EUROPÄISCHE PATENTANMELDUNG

(21) Anmeldenummer: 90100160.2

(22) Anmeldetag: 04.01.90

(51) Int. Cl.5: **F16B 13/02, B25B 21/02**

(30) Priorität: 22.04.89 DE 3913299

(43) Veröffentlichungstag der Anmeldung:
**31.10.90 Patentblatt 90/44**

(84) Benannte Vertragsstaaten:
**AT CH DE DK ES FR GB IT LI LU NL SE**

(71) Anmelder: **ITW-ATECO GmbH**
**Stormarnstrasse 43-49**
**D-2000 Norderstedt 1(DE)**

(72) Erfinder: **Kross, Manfred**
**Wittekindweg 14**

**D-5860 Iserlohn 7(DE)**
Erfinder: **Plümer, Hans-Joachim**
**Brockhauserweg 18a**
**D-5870 Hemer(DE)**
Erfinder: **Kollmann, Harald**
**Südstrasse 21**
**D-5860 Iserlohn(DE)**

(74) Vertreter: **Dipl.-Ing. H. Hauck Dipl.-Ing. E.**
**Graalfs Dipl.-Ing. W. Wehnert Dr.-Ing. W.**
**Döring**
**Neuer Wall 41**
**D-2000 Hamburg 36(DE)**

(54) **Verfahren und Vorrichtung zum Formen eines Gewindes in Gestein oder Beton.**

(57) Verfahren zum Formen eines Gewindes in einem in Gestein oder Beton gebohrten Loch mit Hilfe einer gewindeformenden Schraube, wobei die Gewindeschraube mit Hilfe eines motorischen Einschraubwerkzeugs impulsweise in Drehung versetzt wird.

FIG.1

EP 0 394 604 A2

## Verfahren und Vorrichtung zum Formen eines Gewindes in Gestein oder Beton

Die Erfindung bezieht sich auf ein Verfahren zum Formen eines Gewindes in einem in Gestein oder Beton geformten Loch nach dem Oberbegriff des Patentanspruchs 1.

Zur Befestigung von Gegenständen, beispielsweise Bauteilen, an einem Haltebauteil aus Beton oder hartem Gestein ist bekannt, Dübel zu verwenden. Für den Dübel wird ein Bohrloch geformt, in das der Dübel frei einschiebbar ist. Der Dübel ist bekanntlich so gestaltet, daß er durch das Einschrauben einer Gewindeschraube sich unter Kraftschluß im Bohrloch verspannt. Für die verschiedensten Anwendungszwecke ist eine große Reihe von verschiedenen Dübelkonstruktionen bekanntgeworden.

Da Dübelverbindungen verhältnismäßig aufwendig sind, ist bereits versucht worden, diese durch gewindeformende Schrauben zu ersetzen. Aus der DE-PS 25 21 555 ist eine Schraube bekanntgeworden, die zwei Gewindegänge unterschiedlichen Durchmessers aufweist. Der Gewindegang mit dem größeren Durchmesser formt im Kernbohrloch beim Einschrauben ein Gewinde, während der Gewindegang mit dem kleineren Durchmesser im wesentlichen dem Durchmesser der Kernlochbohrung entspricht. Das im Durchmesser kleinere Gewinde dient daher der Zentrierung der Schraube im Bohrloch und sichert, daß das Gewinde parallel geformt wird. Das im Durchmesser größere Gewinde ist vorzugsweise konisch ausgeführt mit zum Kopf der Schraube zunehmendem Spitzendurchmesser und mit in Umfangsabständen beabstandeten Einschnitten versehen. Eine derartige Schraube läßt sich fest in der Bohrung einbetten und sorgt für eine sichere Verankerung. Es hat sich jedoch herausgestellt, daß trotz der günstigen gewindeformenden Eigenschaften das Einschrauben der bekannten Gewindeformschrauben ab einer bestimmten Einschraubtiefe Schwierigkeiten bereitet. Die beim Formen des Gewindes auftretenden Verformungs- und Reibkräfte werden so hoch, daß ein weiteres Einschrauben nahezu unmöglich wird. Die auf die Schraube aufzubringenden axialen und Drehkräfte werden so hoch, daß die Gefahr besteht, daß die Schraube abgedreht wird. Ein derartiger Vorgang muß jedoch mit Sicherheit verhindert werden, denn es ist außerordentlich umständlich und schwierig, eine abgebrochene Schraube wieder aus dem Bohrloch zu entfernen.

Der Erfindung liegt nun die Aufgabe zugrunde, ein Verfahren zum Formen eines Gewindes in einem in Gestein oder Beton gebohrten Loch mit Hilfe einer gewindeformenden Schraube anzugeben, bei dem die gewindeformende Schraube nicht unzulässig hoch belastet wird.

Diese Aufgabe wird durch das Merkmal des Kennzeichnungsteils des Patentanspruchs 1 gelöst.

Bei dem erfindungsgemäßen Verfahren wird auf die gewindeformende Schraube ein impulsweises oder schlagendes Drehmoment aufgebracht. Der Schlag in Drehrichtung der Schraube bewirkt während des Einschraubens ein permanentes Freischlagen und Ausräumen des Gewindekanals, wodurch der Aufbau eines zu großen Torsionsmomentes für die Schraube vermieden wird.

Bei dem erfindungsgemäßen Verfahren läßt sich ein verhältnismäßig geringes Einschraubmoment einstellen, das gleichwohl ein Einschrauben in variabler Einschraubtiefe ermöglicht. Insbesondere läßt sich eine höhere Einschraubtiefe als beim herkömmlichen Verfahren und damit eine höhere Auszugsfestigkeit erreichen. Das erfindungsgemäße Verfahren hat auch den Vorteil, daß beim Einschrauben nur ein geringer Axialdruck aufgebracht werden muß, was insbesondere bei ungünstigen Schraubpositionen an der Baustelle von Vorteil ist. Da die Gefahr eines Schraubenbruchs nicht besteht, ist auch die Sicherheit der Verschraubung erhöht. Auch die Werkzeuge werden in geringerem Maße beansprucht, so daß sie eine höhere Standzeit aufweisen.

Zur Optimierung der Belastung der Schraube und der Einschraubgeschwindigkeit ist nach einer Ausgestaltung des Verfahrens vorgesehen, daß die Gewindeschraube zunächst kontinuierlich eingeschraubt und bei Erreichen eines vorgegebenen Einschraubmoments impulsweise in Drehung versetzt wird.

Bei einem Verschrauben harter Gegenstände an einem Haltebauteil aus Beton kann es zu einer ganz erheblichen Belastung der Schraube kommen, wenn ihr Kopf an dem harten Gegenstand anliegt und die Schraube weiterhin impulsweise in Drehung versetzt wird. Anders als beim weichen Schraubfall, der beispielsweise bei der Rahmen- oder Dämmstoffbefestigung gegeben ist, muß bei diesem harten Schraubfall, wie er z.B. bei abgehängten Decken vorkommt, eine zuverlässige Abschaltung des motorischen Einschraubwerkzeuges erfolgen. Nach einer Weiterbildung des Verfahrens wird deshalb der Kopf der Gewindeschraube gegenüber dem Gestein oder Beton abgefedert und die Drehung der Schraube vor dem Erreichen eines Abfederungsweges gestoppt, bei dem die Abfederungskraft die Auszugskraft erreicht. Wenn der abgefederte Kolf an dem harten Gegenstand anliegt, kommt es beim weiteren Drehen der Schraube zu einem allmählichen Belastungsanstieg. Im Unterschied zu dem unmittelbar an dem harten Gegenstand anliegenden Kopf ist also kein steiler Belastungsanstieg zu verzeichnen, der infolge der impulsweisen Belastung zu einem Ausziehen der Schraube bzw. Abreißen des Kopfes führen kann. Der gesamte Abfederungsweg, über den die Abfederungskraft die Auszugskraft erreicht, kann somit für die zuverlässige Abschaltung des Einschraubwerkzeuges genutzt werden. Die Abschaltung kann also z.B. an einen vorgegebenen Abfederungsweg oder an einen bestimmten Drehmomentenanstieg anknüpfen. Die nach Abschaltung des Einschraubwerkzeuges eingestellte Abfederungskraft sichert die Schraube in der Bohrung.

Das erfindungsgemäße Verfahren läßt sich für beliebige gewindeformende Schrauben anwenden, die für den Einsatz in hartem Gestein und/oder Beton geeignet sind. Besonders vorteilhaft ist eine Anwendung auf gewindeformende Schrauben, bei denen ein erster und ein zweiter Gewindegang vorgesehen sind, die sich nahezu über die gesamte Schaftlänge erstrecken, wobei der Spitzendurchmesser des ersten Gewindegangs vom Kopfende zum Eintrittsende hin gleichmäßig abnimmt, der Gewindegang mit dem größeren Spitzendurchmesser in Umfangsrichtung beabstandete Einschnitte aufweist und der Spitzendurchmesser des zweiten Gewindeganges im wesentlichen im Durchmesser der vorgebohrten Bohrung entspricht, in die die Schraube einsetzbar ist. Eine derartige gewindeformende Schraube besitzt alle Eigenschaften, die erforderlich sind, um einen Gegenstand an einem Bauteil sicher zu befestigen, d.h. sie kann mit mäßig hohen Drehmomenten gewindeformend in ein Bohrloch bis zu einer beliebigen Schraubtiefe vorgetrieben werden, ohne unzulässig belastet zu werden und sie nimmt gleichwohl einen sicheren, ein hohes Auszugsmoment gewährleistenden Sitz im Bohrloch ein.

Bei der Anwendung des erfindungsgemäßen Verfahrens ist ferner festzustellen, daß durch das schlagweise Gewindeformen die ausgeräumten Materialteilchen in der Gewindezone eine Verdichtung erfahren. Diese Verdichtung trägt dazu bei, das Losdrehmoment deutlich zu erhöhen. Die Kerben oder Einschnitte des Gewindegangs mit dem größeren Spitzen durchmesser zeigen eine verstärkte Räumwirkung und verstärken mithin auch den beschriebenen Verdichtungseffekt.

Bei der bekannten Schraube nimmt der Spitzendurchmesser des Gewindegangs mit dem größeren Durchmesser vom Eintrittsende zum Kopfende hin gleichmäßig zu. Es hat sich indessen als vorteilhaft erwiesen, wenn von der Spitze aus gesehen 1 bis 3 Gewindegänge ausreichen, um auf den Enddurchmesser zu kommen. Dadurch wird bei verhältnismäßig geringer Einschraubtiefe bereits ein hoher Auszugswert erreicht.

Zum Abfedern des Kopfes gegenüber einem harten Gegenstand trägt die Schraube bevorzugt auf dem Schaft mindestens ein am Kopf abgestütztes ringförmiges Federelement, insbesondere einen Federring, eine Federscheibe oder eine Neoprene-Dichtscheibe.

Zur Durchführung des erfindungsgemäßen Verfahrens wird vorzugsweise ein sogenannter Schlagschrauber verwendet. Schlagschrauber sind an sich bekannt. Bei Schlagschraubern dient ein beweglich geführter Schlagkörper als Hammer und der Werkzeugträger als Amboß. Mit Hilfe des Schlagschraubers lassen sich trotz geringen Maschinengewichts höhere Anzugs- und Lösemomente erzielen. Das Gegendrehmoment bei Schlagschraubern ist gering, was sich für die Bedienungsperson angenehm bemerkbar macht. Das Schlagwerk dient nur zu Einschraubzwecken, es tritt erst in Aktion, wenn die Schraube weitgehend angezogen ist, zumindest die Unterseite ihres Kopfes mit der Gegenfläche des Werkstücks in Eingriff gelangt. Mit anderen Worten, die Funktion des Schlagwerks dient dem Festziehen einer Schraube, wobei diese während dieses Vorgangs nur eine mehr oder weniger geringe Winkeldrehung ausführt. Die Schraube oder Mutter wird in bzw. auf ein vorgeformtes Gewinde geschraubt; eine Gewindeformung findet nicht statt. Bei dem erfindungsgemäßen Verfahren dient das impulsweise Aufbringen des Drehmoments auf die gewindeformende Schraube dazu, überhaupt ein Gewinde in einem Bohrloch in hartem Gestein oder Beton zu formen. Für diesen Anwendungszweck ist das erfindungsgemäße Verfahren neu und in seiner Wirkungsweise auch überraschend.

Bei einer bevorzugten Ausgestaltung des Gerätes hat der Schlagschrauber einen, ein Stoppen der Schraubendrehung innerhalb des Abfederungsweges ermöglichenden Tiefenanschlag. Der Tiefenanschlag stützt den Schlagschrauber gegenüber dem harten Gegenstand ab, so daß auch bei einem Weiterdrehen des Schraubers kein Weiterdrehen der Schraube mehr erfolgt, sobald die Kopfangriffsflächen außer Eingriff mit dem Kopf der Schraube kommen. Dies ist innerhalb des Abfederungsweges der Fall. Bei Verwendung eines Tiefenanschlages ermöglicht das Abfedern der Schraube die Verwendung von Schrauben mit verschiedenen Höhen und Gestaltungen der Köpfe, unterschiedliche Abfederungswege und somit unterschiedliches Zusammenpressen ringförmiger Federelemente, und den Einsatz verschiedener Schlagschrauber mit unterschiedlichen Drehmomenten.

Bevorzugt hat der Schlagschrauber eine vorgesetzte Schraubnuß, und ist der Tiefenanschlag eine über Kopfangriffsflächen, insbesondere eines Innensechskants oder eines Kreuzschlitzschraubers der Schraubnuß vorstehende Anschlagshülse. Der Schlagschrauber kann über vorgesetzte Schraubnüsse leicht an verschiedene Schrauben angepaßt werden. Zugleich sichert die Anschlagshülse ein Abschalten der Schraubendrehung, bevor der Kopf der Schraube einen bestimmten Abstand von dem zu verschraubenden Gegenstand unterschreitet. Durch Abwinkeln des Schlagschraubers gegenüber der Einschraubachse kann dieser Abstand nicht unterschritten werden.

Zum Anpassen an verschiedene Abfederungselemente und Schraubengeometrien ist die Anschlagshülse, insbesondere bei Kopfangriffsflächen an einem Innensechskant, auf einer Mantelfläche der Schraubnuß verschieblich und in beliebigen Positionen fixierbar. Der Abstand der Kopfangriffsflächen der Schraubnuß von der Oberfläche des zu verschraubenden Gegenstandes für das Abstoppen der Schraubendrehung ist dann einstellbar.

Aus denselben Gründen können die Kopfangriffsflächen, insbesondere eines Kreuzschlitzschraubers, an einem Stift ausgebildet sein, der in einer Aufnahme der Schraubnuß längsverschieblich und in dieser in beliebigen Positionen fixierbar ist.

Schrauben zur Anwendung des erfindungsgemäßen Verfahrens und Schraubnüsse einer erfindungsgemäßen Vorrichtung zur Durchführung des Verfahrens sind in Zeichnungen dargestellt und sollen nachfolgend kurz beschrieben werden.

Fig. 1 zeigt eine Betonschraube mit Nagelspitze.

Fig. 2 zeigt eine Betonschraube mit gewendelter Spitze.

Fig. 3 zeigt einen Schnitt durch die Schrauben nach Fig. 1 bzw. Fig. 2 entlang der Linie 3-3.

Fig. 4 bis 6 zeigen eine Schraubnuß für einen Außensechskant-Kopf in der Seitenansicht von links, im Längsschnitt und in der Seitenansicht von rechts.

Fig. 7 bis 9 zeigen eine Schraubnuß für einen Kreuzschlitz-Kopf in der Seitenansicht von links, im Längsschnitt und in der Seitenansicht von rechts.

Fig. 10 und 11 zeigen alternative Schraubnüsse für einen Außensechskant-Kopf und einen Kreuzschlitz-Kopf jeweils im Längsschnitt.

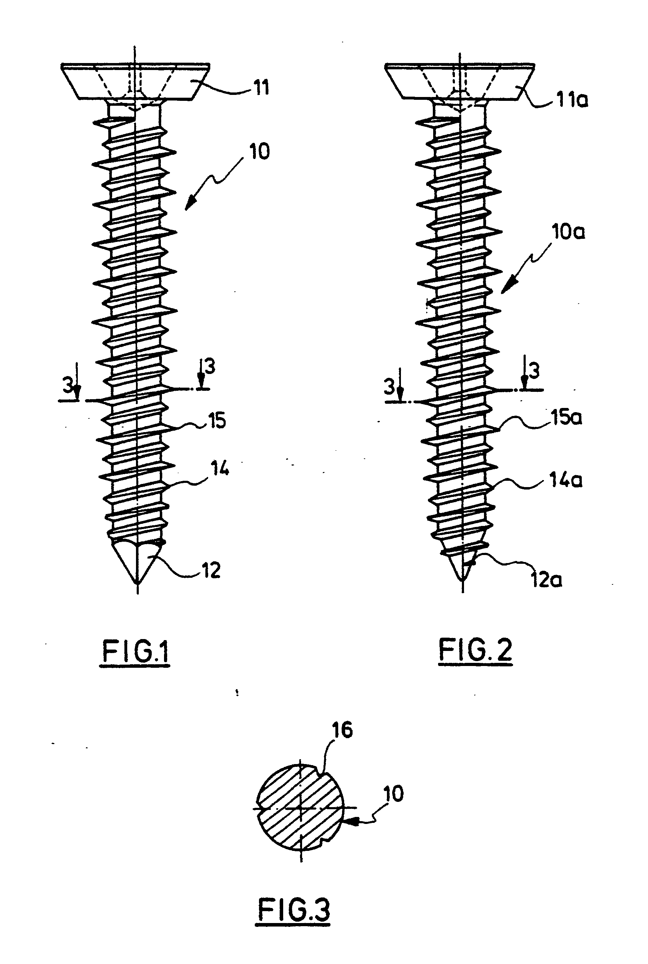

Die in Fig. 1 gezeigte Betonschraube 10 weist einen Kopf 11 auf sowie eine sogenannte Nagelspitze 12. Der Kern des Gewindeschaftes zwischen Kopf 11 und Nagelspitze 12 weist über die Länge gleichen Durchmesser auf. Das Gewinde ist zweigängig und weist einen ersten Gang 14 und einen zweiten Gang 15 auf, wobei letzterer einen größeren Durchmesser aufweist als der erstere. Der Durchmesser des ersten Gewindegangs 14 entspricht dem Durchmesser eines Kernlochs, das im Beton oder einem ähnlichen Werkstoff vorgebohrt ist, in den die Schraube 10 eingeschraubt werden soll. Das Gegengewinde in der Wandung des Kernlochs oder der Kernbohrung wird daher nur von dem Gewindegang 15 erzeugt, während der Gewindegang 14 ausschließlich zentrierende Wirkung entfaltet. Zu Räumungszwecken weist der Gewindegang Kerben 16 auf, wie in Fig. 3 zu erkennen. Wie ferner zu erkennen, ist der Spitzendurchmesser des Gewindegangs 15 nahe der Spitze 12 etwas geringer. Er nimmt von der Spitze 12 ausgehend allmählich zu, erreicht jedoch nach zwei Steigungen bereits den Außendurchmesser, den der Gewindegang 15 darüber aufweist.

Die Betonschraube 10a weist einen Kopf 11a auf (Fig. 2) sowie ein ähnliches Gewinde wie das der Ausführungsform nach Fig. 1. Der Gewindegang 15a mit dem größeren Durchmesser beginnt in der gewendelten Spitze mit einem relativ kleinen Durchmesser, wobei jedoch der volle Durchmesser von der Wendelspitze 12a ausgehend bereits nach drei Steigungen erreicht ist.

Die gezeigten Schrauben 10, 10a ermöglichen bereits bei geringer Einschraubtiefe einen hohen Auszugswert.

Die in den Fig. 4 bis 6 gezeigte Schraubnuß 17 hat eine Aufnahme 18 für einen drehangetriebenen Vierkant eines Schlagschraubers. In der Aufnahme 18 münden zwei Rastbohrungen 19 für eine federbelastete Kugel des Vierkants.

Anderenends hat die Schraubnuß 17 eine Kopfaufnahme 20 für einen Sechskant-Kopf einer Gewindeschraube. Aus herstellungstechnischen Gründen sind Kopfaufnahme 20 und Aufnahme 18 über eine Durchgangsbohrung 21 verbunden.

Auf einer zylindrischen Mantelfläche 22 um die Kopfaufnahme 20 sitzt längsverschieblich eine Anschlagshülse 23, welche mittels einer gegen die Mantelfläche drückbaren Madenschraube 24 fixierbar ist.

Die freie Stirnfläche der Anschlagshülse 23 ist gegenüber den Kopfangriffsflächen der Kopfaufnahme 20 einstellbar, so daß die Kopfaufnahme außer Eingriff mit dem Kopf der Schraube gelangt, bevor dieser unmittelbar an dem zu befestigenden Bauteil anliegt und beim Abfedern des Kopfes die Abfederungskraft die Schraubenauszugskraft erreicht.

Eine in den Fig. 7 bis 9 dargestellte Schraubnuß 25 hat einenends einen Außensechskant-Dorn 26 zum Einstecken in eine drehbewegliche Aufnahme eines Schlagschraubers. Anderenends hat die Schraubnuß 25 eine sechskantförmige Stiftaufnahme 27 für einen Stift 28 eines eines Kreuzschlitzschraubers 29. Der Kreuzschlitzschrauber 29 ist in der Stiftaufnahme 27 längsverschieblich und mittels einer Madenschraube 30 fixierbar.

Den Kreuzschlitzschrauber 29 umgibt eine fest an die Schraunuß 25 angeformte Anschlagshülse 31, deren freie Stirnfläche einen Abstand von den Kraftangriffsflächen des Kreuzschlitzschraubers hat. Dieser Abstand ist infolge der Längsverschieblichkeit des Kreuzschlitzschraubers 29 einstellbar, so daß dieser eine Schraube freigibt, bevor deren Kopf unmittelbar zur Anlage kommt und die Abfederungskraft die Auszugskraft erreicht.

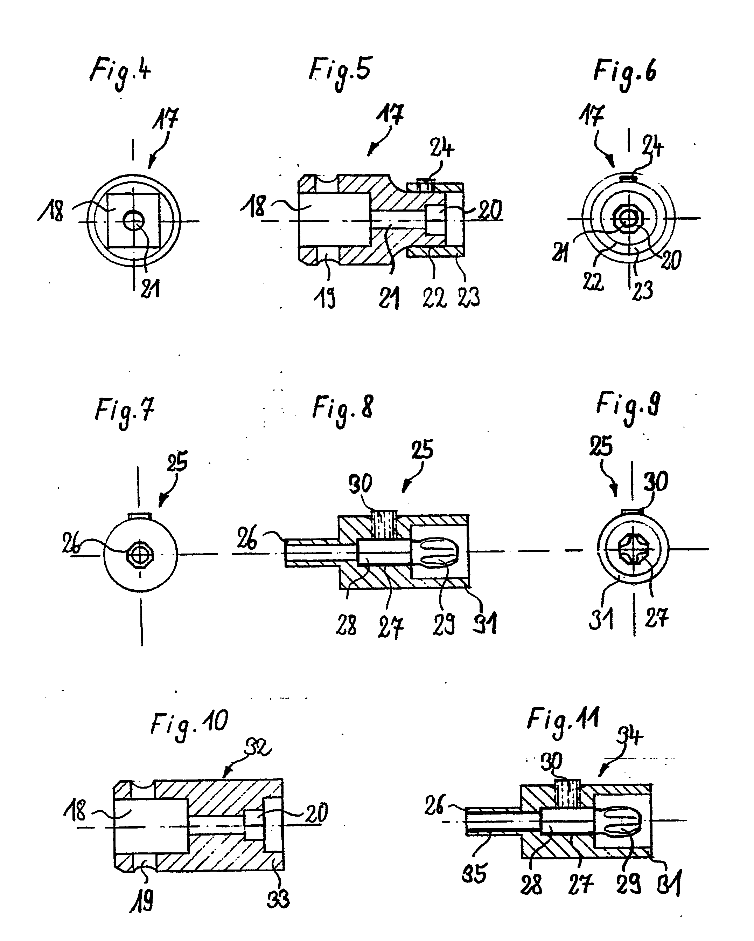

Eine Schraubnuß 32 nach Fig. 10 hat im Unterschied zu der nach den Fig. 4 bis 6 eine einteilig angeformte Anschlagshülse 33 anstatt einer längsverschieblichen und mit einer Madenschraube fixierbaren. Soweit die Konstruktionsmerkmale der Schraubnuß 32 mit denjenigen der Schraubnuß 17 übereinstimmen, wurden identische Bezugsziffern verwendet.

Eine Schraubnuß 34 gemäß Fig. 11 hat außer den Merkmalen der in den Fig. 7 bis 9 gezeigten im Sechskant-Dorn 26 ein Gewinde 35 für eine Madenschraube zum axialen Abstützen des Stiftes 28.

## Ansprüche

1. Verfahren zum Formen eines Gewindes in einem in Gestein oder Beton gebohrten Loch mit Hilfe einer gewindeformenden Schraube, dadurch gekennzeichnet, daß die Gewindeschraube mit Hilfe eines motorischen Einschraubwerkzeuges impulsweise in Drehung versetzt wird.

2. Verfahren nach Anspruch 1, dadurch gekennzeichnet, daß die Gewindeschraube zunächst kontinuierlich eingeschraut und bei Erreichen eines vorgegebenen Einschraubmoments impulsweise in Drehung versetzt wird.

3. Verfahren nach Anspruch 1 oder 2, dadurch gekennzeichnet, daß ein Kopf der Gewindeschraube gegenüber dem Gestein oder Beton abgefedert wird, und daß die Drehung der Schraube vor dem Erreichen eines Abfederungsweges gestoppt wird, bei dem die Abfederungskraft die Auszugskraft erreicht.

4. Verfahren nach einem der Ansprüche 1 bis 3, gekennzeichnet durch seine Anwendung auf eine gewindeformende Schraube, bei der ein erster und ein zweiter Gewindegang vorgesehen sind, die sich nahezu über die gesamte Schaftlänge erstrecken, wobei der Spitzendurchmesser des ersten Gewindegangs vom Kopfende zum Eintrittsende hin gleichmäßig abnimmt, der Gewindegang mit dem größeren Spitzendurchmesser in Umfangsrichtung beabstandete Einschnitte aufweist und der Spitzendurchmesser des zweiten Gewindegangs im wesentlichen im Durchmesser der vorgebohrten Bohrung entspricht, in die die Schraube einsetzbar ist.

5. Verfahren nach Anspruch 4, dadurch gekennzeichnet, daß von dem freien Ende aus gesehen der Spitzendurchmesser des Gewindes mit dem größeren Spitzendurchmesser nach ein bis drei Gewindesteigungen seinen Endwert erreicht.

6. Verfahren nach Anspruch 3 in Verbindung mit Anspruch 4 oder 5, dadurch gekennzeichnet, daß die Schraube auf dem Schaft mindestens ein am Kopf abgestütztes ringförmiges Federelement, insbesondere einen Federring, eine Federscheibe oder eine Neoprene-Dichtscheibe trägt.

7. Gerät zur Durchführung des Verfahrens nach einem der Ansprüche 1 bis 6, dadurch gekennzeichnet, daß ein Schlagschrauber vorgesehen ist.

8. Gerät nach Anspruch 7, dadurch gekennzeichnet, daß der Schlagschrauber einen, ein Stoppen der Schraubendrehung innerhalb des Abfederungsweges ermöglichenden Tiefenanschlag hat.

9. Gerät nach Anspruch 8, dadurch gekennzeichnet, daß der Schlagschrauber eine vorgesetzte Schraubnuß (17, 18) hat, und der Tiefenanschlag eine über Kopfangriffsflächen, insbesondere eines Innensechskants (20) oder eines Kreuzschlitzschraübers (29) der Schraubnuß vorstehende Anschlagshülse (23, 31) ist.

10. Gerät nach Anspruch 9, dadurch gekennzeichnet, daß die Anschlagshülse (23) auf einer Mantelfläche (22) der Schraubnuß (17) verschieblich und in beliebigen Positionen fixierbar ist.

11. Gerät nach Anspruch 9 oder 10, dadurch gekennzeichnet, daß die Kopfangriffsflächen, insbesondere eines Kreuzschlitzschraübers (29), an einem Stift (28) ausgebildet sind, der in einer Aufnahme (27) der Schraubnuß längsverschieblich und in dieser in beliebigen Positionen fixierbar ist.

FIG.1

FIG.2

FIG.3

Fig.4  Fig.5  Fig.6

Fig.7  Fig.8  Fig.9

Fig.10  Fig.11